# EUROPÄISCHE PATENTSCHRIFT

(11) **EP 0 890 329 B1**
(45) Veröffentlichungstag und Bekanntmachung des Hinweises auf die Patenterteilung: **24.03.2004**
(21) Anmeldenummer: 98110261.9
(22) Anmeldetag: 05.06.1998
(51) Int. Cl.: A47B 88/00, B65G 1/08, B65G 1/137

(54) **Regal mit Entladevorrichtung**
Shelf with unloading device
Rayonnage avec dispositif de déchargement

(30) Priorität: 11.06.1997 DE 19724378
(43) Veröffentlichungstag der Anmeldung: 13.01.1999
(73) Patentinhaber: Stirnberg, Stefan, 52078 Aachen (DE)
(72) Erfinder: Stirnberg, Stefan, 52078 Aachen (DE)
(74) Vertreter: Kaewert, Klaus

(56) Entgegenhaltungen:
- EP-A- 0 779 605
- DE-A- 4 336 885
- FR-A- 2 678 540
- GB-A- 2 136 411
- US-A- 3 674 159
- US-A- 4 307 988
- US-A- 4 717 044
- US-A- 5 337 919

## Beschreibung

Die Erfindung betrifft ein Regal, insbesondere für kleinteilige Güter wie bspw. Arzneien für Apotheken (siehe die Druckchrift DE-A-43 36 885). Vor allem in Apotheken stellt sich das Problem der Vielzahl der Verkaufsgüter. Tausende Arzneien werden vorgehalten. Das bedingt eine wohl organisierte Lagerhaltung. Dementsprechend umfangreich sind die Regale in Apotheken ausgestaltet. Ferner ist vorgesehen, daß jedes Arzneimittel einen bestimmten Platz in den Regalen einnimmt.
Die Lagerhaltung bedingt zugleich eine erhebliche Verantwortung, weil Notfällen mit der Verfügbarkeit der Arzneien Rechnung getragen werden muß.
Eine ähnliche Problematik kann sich aber auch mit anderen, auch größeren Lagergütern ergeben. Solche Lagergüter konnen unter anderem Schuhkartons sein

Der mit obiger Lagerhaltung von Arzneien erforderliche Aufwand ist extrem groß. Das Aufsuchen der Arzneien in den Regalen ist zeitaufwendig, desgleichen das Nachfüllen.
Um die Arzneien aufzusuchen, müssen die Kunden häufig allein gelassen werden. Das ist aus verschiedenen Gründen unangenehm. Besser wäre es, den Kunden zu beraten, statt ihn allein zu lassen. Außerdem stellt sich dann nicht das Problem mangelnder Aufsicht in den Verkaufsräumen.

Seit Jahren werden Regalsysteme angeboten, die das Aufsuchen der Arzneien erleichtern. Das verkürzt den Zeitaufwand. Teilweise werden die Regale auch mit automatischen Entladungsvorrichtungen und mit automatischer Befülleinrichtung angeboten. Allerdings konnten sich die automatischen Entladungsvorrichtung und Befülleinrichtung bislang nicht richtig durchsetzen. Die mangelnde Durchsetzung wird auf Schwierigkeiten der Entladevorrichtungen und Befülleinrichtungen zurückgeführt.
Insgesamt sind die Vorrichtungen zu aufwendig und zu kompliziert. Jedes Konstruktionsteil bildet eine Fehlerquelle.

Der Erfindung liegt daher die Aufgabe zugrunde, eine einfache und zuverlässige Konstruktion zu schaffen.
Diese Aufgabe wird durch die Merkmale des Anspruch 1 gelöst.

Die Erfindung geht dabei davon aus, daß der bei allen Einrichtungen verwendete Greifmechanismus eine ganz besondere Störungsquelle bildet. Der Greifmechanismus ist extrem aufwendig und wartungsbedürftig. Seine Steuerung muß extrem genau sein. Nach der Erfindung wird die Entladevorrichtung dadurch wesentlich vereinfacht, daß anstelle des Greifmechanismus ein Stößel(Ausstoßhebel) vorgesehen ist. Bei einem Stößel haben die Ausmaße, Form und Gewicht der Produkte/Artikel nur eine untergeordnete Bedeutung. Der Stößel hebt die Produkte/Artikel aus dem zugehörigen Schacht und vorzugsweise hat der Stößel eine Neigung, so daß die Produkte/Artikel auf dem Stößel aus dem Bereich des Schachtes abrutschen und aufgefangen und ihrer Bestimmung zugeführt werden können.

Zum Anheben werden die Produkte/Artikel untergriffen. In dem Schacht findet sich zum Untergreifen der Produkte/Artikel eine Aussparung. Günstige Verhältnisse ergeben sich, wenn die Artikel zwischen Schienen und auf Schienen gehalten werden, die Abstand voneinander haben. Besonders geeignet sind T-förmige Schienen, deren vertikaler Steg nach oben weist und auf deren horizontalen seitlichen Stegen die Produkte/Artikel aufliegen. Die T-förmigen Schienen sind im Abstand voneinander angeordnet, so daß der Stößel zum Anheben der Produkte/Artikel zwischen die Schienen greifen kann. Durch gleichzeitige Neigung der Schienen zur Entnahmeseite rutschen die Produkte/Artikel aufgrund ihres Gewichtes in die richtige Entnahmeposition.

Zum Auffangen der ausgehobenen und von dem Stößel rutschenden Produkte dient eine Sammelvorrichtung in Form eines Behälters. Der Behälter kann die Form einer offenen Schachtel aufweisen. Durch Neigung des Behälters und Öffnen der Rückwand gleiten die Produkte/Artikel aus dem geneigten Behälter heraus auf ein Förderband oder eine andere Fördereinrichtung.

Zwar ist der erfindungsgemäße Stößel wie bekannte Entladevorrichtungen am Regal entlang verfahrbar und auch mit einer Hub- und Senkvorrichtung versehen. Der Hub- und Senkantrieb bildet zugleich den Antrieb für das Anheben des Stößels. Zum Unterfassen der Produkte/Artikel wird der Stößel vorgefahren. Die Bewegung des Stößels erfordert jedoch gegenüber der bekannten Vorrichtung einen vergleichsweise geringen Aufwand.

Der Antrieb kann beliebiger Art sein. Geeignete Antriebe sind elektrische oder hydraulische oder pneumatische Antriebe. Desgleichen kommen rein mechanische Antriebe zum Verfahren des Stößels in Betracht, auch Linearantriebe. Der Antrieb kann dabei zugleich die Stößelführung bilden. Wahlweise ist aber auch eine separate Stößelführung vorgesehen.

Nach dem Anheben der Produkte/Artikel kann der Stößel wieder zurückgefahren werden. Vorteilhafterweise entfällt bei dem erfindungsgemäßen Stößel neben dem Greifermechanismus bekannter Vorrichtungen auch der Greiferantrieb einschließlich Steuerung.

Vorzugsweise ist nach der Erfindung auch ein neuartiges Fahrwerk für den Stößel und die Hubeinrichtung vorgesehen. Die Entladevorrichtung wird hängend betrieben. Die hängende Anordnung hat den Vorteil großer Bodenfreiheit. Die hängende Anordnung hat auch für andere Entnahmevorrichtungen Vorteile.

Zur hängenden Anordnung dient eine im oberen Bereich der Regale angeordnete Fahrschiene.
Die Fahrschiene nimmt das Gesamtgewicht der Vorrichtung und der vertikal wirkenden Belastungen aus dem Betrieb auf. Dementsprechend ist das Profil der Fahrschiene gewählt. Auf der horizontalen Fahrschiene läuft ein Fahrwagen, der mit einem Zahnriemen bewegt werden kann und eine weitere vertikal angeordnete Fahrschiene trägt. Die vertikal angeordnete Fahrschiene wird durch eine Versteifung des Wagenrahmens an einer unerwünschten Bewegung in der Ebene gehindert, in der die beiden Fahrschienen liegen. An einer unerwünschten Bewegung quer zu der genannten Ebene hindert eine Führungsschiene am Fuß der vertikalen Führungsschiene.
Die vertikale Führungsschiene kann in gleicher Weise wie die horizontale Führungsschiene ausgebildet und mit einem Zahnriementrieb versehen sein.

Kern der Führungsschienen sind Präzisionsprofile, z.b. aus Aluminium. An beiden Schienenenden befinden sich Umlenkungen für den Riementrieb. Wahlweise ist an einem Ende zugleich eine Riemenscheibe mit einem Antriebsmotor vorgesehen. Die Enden des Zahnriemens sind an dem Fahrwagen befestigt, so daß der Fahrwagen von dem Motor über den Zahnriemen bewegt werden kann.

Wahlweise ist der Fahrwagen mit zweireihigen Profillaufrollen bestückt, deren Wellenlautbahn als gotischer Bogen ausgeführt ist. Für sehr hohe Belastungen können die Wagen mit einer beliebigen Anzahl Profillaufrollen ausgerüstet werden. Die Profillaufrollen werden mit Stahlleisten direkt an einer Wagenplatte befestigt. Die Konstruktion ist sehr biegesteif Die spielfreie Einstellung der Führungen erfolgt mit Exzenterbüchsen.

Vorzugsweise wird die erfindungsgemäße Entladevorrichtung mit einem neuartigen Regelsystem kombiniert. Das wird mit Hilfe eines Gestells erreicht, das aus Seitenwänden und Traversen besteht, auf denen T-förmige Schienen gehalten sind, wobei die T-förmigen Schienen mit dem senkrechten Steg nach unten weisen und mit den beiden horizontal verlaufenden seitlichen Stegen die Produkte/Artikel seitlich untergreifen. Allein schon die Verwendung der T-förmigen Schienen ergibt eine erhebliche Reduzierung des baulichen Aufwandes, weil es unnötig ist, die Produkte/Artikel vollflächig zu unterstützen Die Verpackungen sind alle so stabil oder können so stabil gestaltet werden, daß kein Durchfallen der Produkte/Artikel zu befürchten ist. Dies ist auch dann ein Vorteil, wenn ohne die erfindungsgemäße Abstandsänderung ein Regal erstellt wird.
Durch die mögliche Abstandsänderung kann der Apotheker sein Regal jederzeit umbauen und seinem Geschäft anpassen Dazu müssen lediglich die T-förmigen Schienen auf den Traversen horizontal verschoben werden.
Vorteilhafterweise kann der Abstand zwischen den Schienen durch die Abstandsänderung minimiert und die Gestellbreite optimal ausgenutzt werden.
Vorzugsweise sind die T-förmigen Schienen auf den Traversen verschraubt oder verstiftet und sind die zugehörigen Löcher in einem Rastermaß angeordnet. Das Rastermaß erleichtert die richtige Montage, weil nur die Löcher gezählt und kein Abstand gemessen werden muß, um die Schienen genau parallel zueinander und zu den Seitenwangen der Regale anzuordnen. Das Rastermaß hat darüber hinaus den Vorteil, daß die Lage der jeweiligen Schächte anhand der Löcher gezählt werden kann. Das erleichtert die Steuerung einer Entladevorrichtung und/oder Füllvorrichtung.
Das Rastermaß beträgt wahlweise bis 20 mm. Je kleiner das Rastermaß ist, desto genauer ist die Anpassung an die Produkte/Artikel möglich. Vorzugsweise ist das Rastermaß kleiner als 10 mm. Günstige Verhältnisse ergeben sich bei einem Rastermaß von 5 mm bzw. 5,04 mm

Die Löcher können Bohrungen mit einem Durchmesser sein, der klein gewählt wird. Bei dem Rastermaß von 5 mm können Durchmesser von 1mm bis 3 mm günstige Verhältnisse geben. Dabei ist nicht unbedingt der kleinste Durchmesser der günstigste, weil z.B. bei einem Durchmesser von einem Millimeter die Bohrer leicht brechen und Gewindeschrauben leicht überdreht werden. Besonders gut lassen sich Bohrungen mit 3 mm, auch Gewindebohrungen M 3 herstellen. Im Umgang von Schrauben M 3 besteht bei den Anwendern mehr Erfahrung als bei kleineren Schrauben. In der Anwendung solcher Schrauben bleibt noch ausreichend Material zwischen den Schraubenlöchern stehen, wenn das Rastermaß 5 bzw. 5,04 mm beträgt.

Die Schrauben können von oben durch seitliche und horizontal verlaufenden Stege der T-förmigen Schienen in die Traversen eingebracht werden. Es ist aber auch möglich, die T-förmigen Schienen kopfseitig zu verschrauben. Vorzugsweise sind die T-förmigen Schienen dazu kopfseitig mit einem Materialstück unterlegt, das zumindest ein Durchgangsloch fur die Verschraubung mit den Traversen aufweist. Das Materialstück ist wahlweise seinerseits mit der T-förmigen Schiene verschraubt.

Die Traversen können aus Vollmaterial bestehen. Es können aber auch Profile verwendet werden. Das gleiche gilt für die Seitenwangen. Günstig sind Rahmenkonstruktionen für die Seitenwangen, die aus Vierkantprofilen quadratischen Querschnittes bestehen und an mindestens zwei Seiten mittig mit Längsnuten versehen sind, besser sind Profile mit einer mittigen Nut auf jeder Seitenfläche. Derartige Profile werden in einem leicht handhabbaren und verarbeitbaren Aluminium angeboten.
Es ist zweckmäßig, möglichst viele Teile des Lagers aus gleichen Profilen herzustellen. Das schließt das Entladegerät ein.

In der am Markt verfügbaren Profilreihe finden sich darüber hinaus Profilstäbe, in die Gewindestreifen einschiebbar oder an denen Gewindestreifen angeformt sind. Die Profilstäbe ergeben sehr vorteilhafte Traversen.
Solche Profilreihen sind auch mit Zoll-Maßen am Markt verfügbar. Dann ist der Mittenabstand der Gewindebohrungen(gleich Rastermaß) nicht genau 5 mm, sondern 5,04 mm.

Wahlweise wird das T-formige Profil auch aus zwei L-formigen Profilen zusammengesetzt

Um die Zahl der verwendeten Profile zu reduzieren, empfiehlt sich die bereits bekannte Modulbauweise. Vorzugsweise ist die maximale Modulbreite in Apotheken 2 m. In Verfahrrichtung der Entladevorrichtungen und Füllvorrichtungen ist die Modulbreite gleich der Fahrlänge entlang dem Modul

Wahlweise werden die erfindungsgemäße Entladevorrichtung und/oder das Regal mit einer Befülleinrichtung kombiniert, welche das Regal an der der Entladevorrichtung abgewandten Seite befüllt. Dabei hilft die Schachtneigung, weil die Lagergüter aufgrund ihres Gewichtes nach unten zur Entnahmeseite rutschen.
Für die Befülleinrichtung wird z.B. eine ähnliche Einrichtung wie der Sammelbehälter der Entladevorrichtung vorgeschlagen. D.h. es ist ein geneigter Behälter mit einer Klappe am unteren Ende vorgesehen. Durch Herunterklappen der Klappe kann der Spalt bis zu dem bestimmungsgemäßen Schacht überbrückt und das Ladegut in das Regal gelenkt werden. Günstig ist, wenn die abgeklappte Klappe die Behälterneigung ganz oder teilweise fortsetzt.

Alternativ kann der als Befüllvorrichtung dienende geneigte Behälter statt der Klappe mit einem Haltehebel versehen sein. Der Haltehebel läßt sich z.B. mittels eines Hubmagneten, auch auch mittels eines Schrittmotors mit Getriebe oder andere Art bewegen.
Möglich ist auch eine lineare Führung, bei welcher der Hubmagnet unmittelbar auf das Lagergüter wirken kann.
Günstig ist, wenn der Hebel vorne möglichst flach ist, damit die Befüllvorrichtung möglichst dicht hinter dem Regal bewegt werden kann. Das reduziert den zu überbrückenden Spalt.
Günstig ist auch eine seitliche Führung des Ladegutes. Die seitliche Führung kann aus einem Haltestift ode einer Haltewand bestehen. Zweckmäßig ist, wenn Stift und/oder Wand auf ein Maß gefahren werden, das geringfügig größer ist ald die Packungsbreite.

In der Zeichnung ist ein Ausführungsbeispiel der Erfindung dargestellt:

Die entwickelte Kommissionieranlage für Kleinteile, insbesondere Apothekenprodukte besteht aus mindestens einem Lager-Modul 1, dessen Grundgerüst aus Standard-Aluminiumkonstruktionsprofilen aufgebaut und am Fußboden sowie bevorzugt auch an der Raumdecke befestigt ist. Am Grundgerüst sind Querstreben 22 mit speziell zu diesem Zweck konstruierte Flachquadern 26 bestehen aus handelsüblichen, aus der 19"-Gehäusetrechnik stammenden Profilen mit eingeschobenen Gewindestreifen 23, die das sehr einfache Einstellen der Führungskanalbreiten in 5mm-Schritten ermöglichen. Dies geschieht durch Befestigen der Quaderstücke 26 mittels längs durch diesen geführten, in den Gewindestreifen eingeschraubten Schrauben 28.

Die Gewindestreifen sind handelsüblich (19''-Zubehör) und besitzen in Längsrichtung im 5,04mm-Raster angeordnete Gewinde.
Jeder der (zur Vorderseite hin abfallend geneigten) Führungskanäle 29 zur sortenreinen Aufnahme von Produktpackungen 24 besteht aus einem oder zwei T- bzw. L-Profilen 27, die jeweils mittels Schrauben 25 und den bereits erwähnten Befestigungsquadem (26) an den Querstreben 22,23 befestigt werden.
Dabei werden die L- auch (Winkel-) Profile 27 bevorzugt für nicht eckige (also runde, ovale, abgerundete etc.) Packungen verwendet.

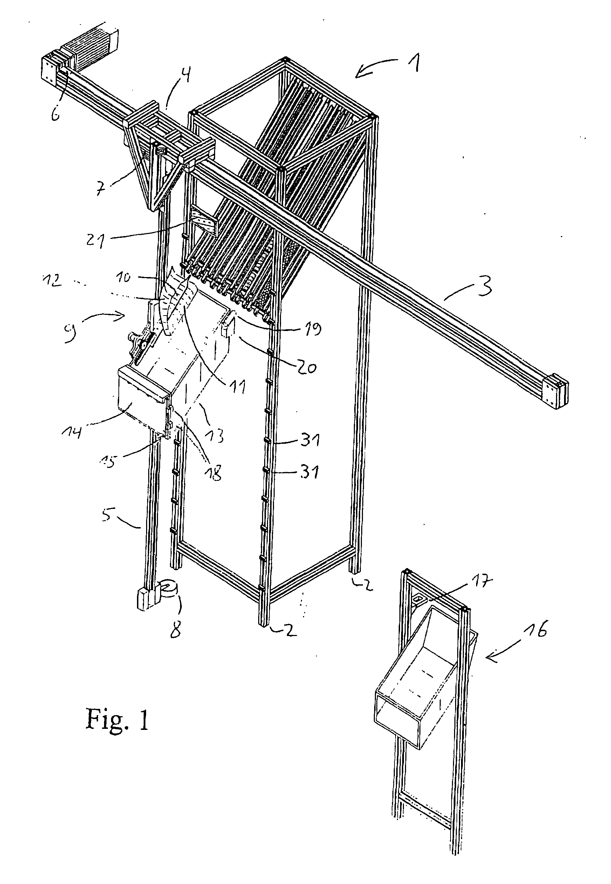

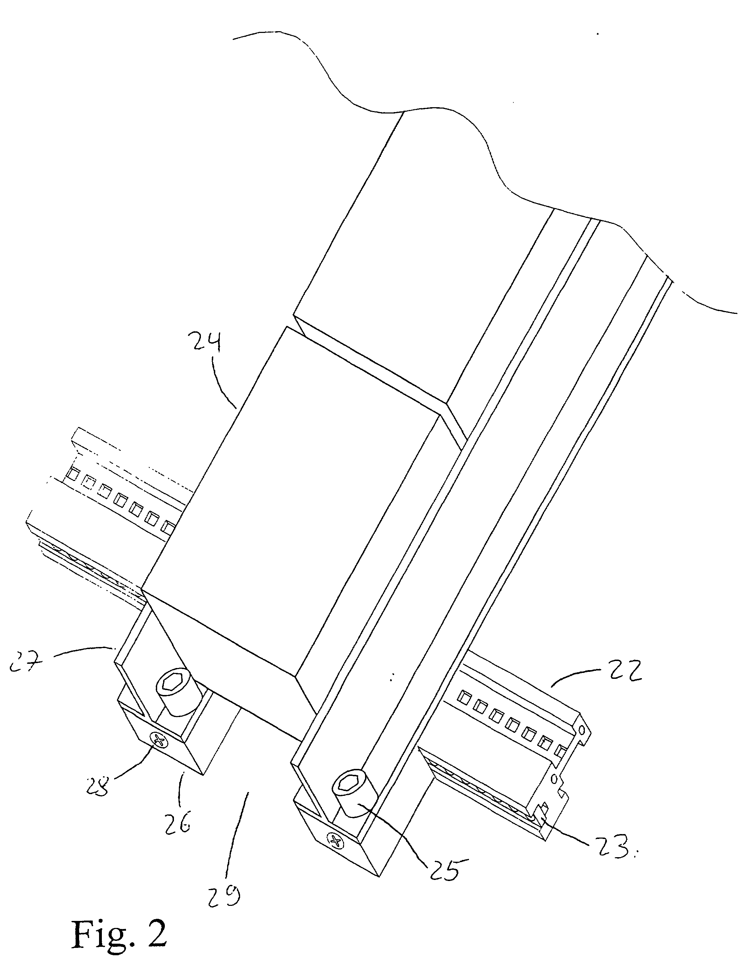

Als Befestigungsschrauben für die Führungsprofile sind vorzugsweise Schrauben 25, die einen großen Kopf aufweisen (bevorzugt Inbus-Schrauben), zu verwenden, da sie außer der Befestigung vor allem der Fixierung der im Führungskanal befindlichen Produktpackungen dienen (Fig. 2).

Im Normalfall wird man mehrere Lagermodule 1 nebeneinander anordneten, wobei man zur Material- und Platzeinsparung die Vertikalstützen sowie die Horizontalstützen quer zur Anreih-Richtung je eines der beiden aneinander gestellten Module weglassen kann.

Vor den Lagermodulen befindet sich in Horizontalrichtung eine deckengeführte Standard-Roboterlineareinheit 3, an deren Laufwagen 4 eine weitere Standardlineareinheit 5 mit vertikaler Ausrichtung befestigt ist. Beide Lineareinheiten werden über Zahnriemen 6 (in der der Zeichnung nur angedeutet) von Elektromotoren 7 angetrieben.

Bei der entwickelten Anlage soll die Rolle 8 zur Aufnahme des Moments vorzugsweise weggelassen werden. Nach dem bisherigen Stand der Versuche mit der realen Anlage führt dies nicht zu untolerierbaren Schwingungen.

Anstelle des einen Führungsrades/Rolle 8 ist in einem anderen Ausführungsbeispiel eine Anordnung von zwei Rädern vorgesehen. Die Räder sind so angebracht, daß diese durch Federdruckauf den Boden gedrückt werden. Der justierbare Druck ist dabei so gering, daß ein Verklemmen der vertikalen Achse verhindert wird, jedoch gerade so stark, daß eine Dämpfung der auftretenden Achs-Schwingungen erreicht wird. Wahlweise wird die Schwingungsdämpfung noch dadurch verstärkt, daß eine zweite horizontale Achse installiert und ebenfalls angetrieben wird, um der vertikalen Achse weitere Stabilität zu geben und eine höhere Verfahrgeschwindigkeit zu gewährleisten.
Dabei kommt eine Anordnung der Parallelachse unter der oberen Horizontalachse oder seitlich versetzt, ggfs. auch um 90 Grad gekippt in Betracht.

Die Entnahmevorrichtung 9 besteht aus einem flachen, leicht runden und nach vorne hin verjüngten Stoßhebel 10 (dieser Stoßhebel kann natürlich jede beliebige andere Form haben, solange er nur seinen Zweck erfüllt), der mittels eines geeigneten Linearantriebs (zur Zeit eine Zahnstange mit Ritzel, aber andere Möglichkeiten sind natürlich ebenfalls denkbar) ein- und ausgefahren werden kann. Dieser Stoßhebel befindet sich über einem geeignet geformten Blech (bzw. Kunststoff-Formteil) 11, über welches die ausgestoßene Produktpackung in den unter dem Stößel befindlichen Auffangbehälter 13 gleitet. Packungen, die nicht schnell genug von selbst seitlich in Richtung der oberen Öffnung des Auffangbehälters fallen, werden durch ein zweites Blech (bzw. Kunststoff-Formteil) 12 in die korrekte Richtung abgelenkt. Die Führung der Packungen während der ersten Zentimeter nach dem Verlassen des Führungskanals gewährleistet der flache, leicht runde, breite Teil des Stoßhebels, welcher im ausgefahrenen Zustand bis fast an das vordere Ende des Führungskanals heranreicht, so daß die Packung nicht zwischen Führungskanal und Auffangbehälter hindurch auf die Erde fallen kann. Selbst kreisrunde Produktpackungen werden bei der Entnahme so lange durch die Seitenwände der Lagerkanäle geführt, bis sich die unvermeidbare seitliche Rollbewegung unweigerlich in Richtung des Auffangbehälters vollzieht, so daß auch diese Packungsart dem Führungskanal sicher entnommen werden kann.

Der Ausstoßhebel kann (muß aber nicht) an seiner Spitze mit einer Druck- oder Berührungssensorik ausgestattet sein, die den Ausfahrvorgang des Hebels stoppen kann, falls aus irgendeinem Grunde die Positionierung nicht korrekt vorgenommen wurde. Die Anlage könnte dann versuchen, die Position in alle vier Richtung leicht zu variieren, um so möglichst doch noch eine Entnahme zu gewährleisten und im Erfolgsfalle in einer Art Selbstlernprozeß die ursprünglich gespeicherte Position durch die neu gefundene Position zu ersetzen. Diese Vorgehensweise würde einerseits die Anlage selbst vor Schäden und Selbstzerstörung schützen und andererseits im Falle manueller Vermessung der Führungskanalanordnung eine größere Fehlertoleranz zulassen, was bei mehreren tausend Kanälen einen erheblichen Zeitgewinn durch schnelleres (weil weniger präzises) Messen bedeuten würde.
Alternativ zur Anbringung der o.a.Druck- oder Berührungssensorik könnte ein ähnlicher Effekt auch durch eine softwaremäßige Zeitmessung erreicht werden. Dabei würde man die Zeit messen bis zu dem Zeitpunkt, an dem der Stoßhebel normalerweise ausgefahren sein sollte (feststellbar durch den Schaltzustand des Endpositionsschalters). Ist der Endschalter zu diesem Zeitpunkt plus einer Toleranzzeit x noch nicht von der Stoßhebelachse betätigt, so kann das steuernde PC-Programm davon ausgehen, daß eine Fehlpositionierung vorliegt. Es kann dann auf die gleiche Weise gegensteuern, wie dies bereits für die Variante mit Druckoder Berührungssensorik beschrieben wurde. Voraussetzung für einen derartigen Betrieb der Stoßhebelvorrichtung ist natürlich, daß ihr Antrieb die dabei entstehenden Belastungen (abruptes Abbremsen bei weiterhin unter Spannung:stehendem Motor) entweder aushält oder durch einen Kupplungsmechanismus abfängt.

Der Auffangbehälter 13 besitzt durch geneigte Behälteranordnung oder durch schräge Bodenanordnung bei vertikalen Wänden einen schrägen Boden, der die aus den Führungskanälen ausgestoßenen Packungen bis an die vordere Ausgabeöffnung rutschen läßt, die durch eine einer Schiebetür ähnliche Klappe 14 verschlossen ist. Diese Klappe kann mittels des angebrachten Hakens 15 und der korrespondierenden Öse 17 an den Abgabestellen 16 durch entsprechende Bewegung der Horizontal- sowie der Vertikalachse des Systems ohne eigenen Antriebsmechanismus geöffnet und geschlossen werden. Dadurch werden Kosten und (nie zu 100% störungsfreie) mechanisch-elektrische Komponenten sowie zugehörige Verkabelungen eingespart.

In einem anderen Ausführungsbeispiel wird die Öse zur Öffnung der Klappe durch simple Metallwinkel ersetzt, die von einem an der Behälterklappe befestigten Magnetschnapper angefahren werden, und so ein Öffnen und Schließen der Klappe durch Verfahren des Behälters ermöglichen. Dieses Verfahren ist weniger aufwendig und außerdem zuverlässiger und ruhiger im Betrieb, die Zerstörungsgefahr durch verstellte Ösen entfällt.

Ein unbeabsichtigtes Öffnen des Behälters wird durch Magnetschnapper oder eine elektromagnetisch betriebene Schließvorrichtung 18 verhindert.
Es kann natürlich auch eine Vielzahl weiterer Abgabeplätze mit Öffnungsösen installiert werden.
Der Weitertransport der Produktpackungen zum Verkaufstisch erfolgt durch allgemein bekannte und vertriebene Transportsysteme, bevorzugt jedoch durch ähnliche Lineareinheiten wie für die Hauptachsen (wegen der erzielbaren hohen Beschleunigungs- und Geschwindigkeitswerte) und/oder durch Rutschen (wegen der geringen Kosten und der entfallenden Technik und Wartung).

Der Ausstoß- und Auffangvorrichtung ist desweiteren optional mit einer Sensorik 19 ausgestattet, die auf optischem, induktivem oder kapazitivem Wege die eingestellten Positionen der Führungskanäle bestimmen kann. Dies geschieht dadurch, daß die Vorrichtung rasterartig an den aufgestellten Lagermodulen entlang bewegt wird und jedesmal, wenn die Stirnseite eines Führungsprofils 27 bzw. des zugehörigen Befestigungsquaders 26 erkannt wird, ein Signal zur Computersteuerung sendet, das diese veranlaßt, die aktuelle Position der zwei Hauptachsen zu speichern, um beim späteren Kommissionierungsvorgang auf diese z.B. auf Festplatte abgelegten Positionsdaten zurückgreifen zu können. Zusätzlich können auf der erwähnten Stirnseite Strichcodes angebracht sein, die entweder die Art des gelagerten Produkts, die Art des verwendeten Führungsprofils, sonstige Informationen oder einfach eine Kanalnummer kodieren.

Hierzu wird außer der Positionssensorik ebenfalls ein Strichcode-Lesegerät 20 angebracht. Auch dieser Zusatz ist optional und wird bei der kommerziellen Auswertung den Performance- und Preisvorstellungen des Kunden entsprechend installiert oder weggelassen.

Für den nie auszuschließenden Störungsfall ist die Anlage mit einer Vorrichtung zu versehen, die dem Bediener das Wiederfinden von Produkten ermöglicht (im nicht alphabetisch, sondern nach Entnahmefrequenz und Packungsgrößen sortierten Lager). Hierzu sind alphanumerische Anzeigen in Form von handelsüblichen LED- oder LCD-Bausteinen oder gewöhnlichen Computerbildschirmen bzw. LCD-Flachbildschirmen 21 bevorzugt an mindestens einem Lagermodul angebracht. Eine eventuelle Anbringung an anderer Stelle muß natürlich so vorgesehen sein, daß ein sich vor dem/den Lagermodul(en) aufhaltender Mensch die angezeigten Informationen bequem ablesen kann.
Die beschriebene Störfall-Anzeige informiert die mit der Kommissionierung betraute(n) Person(en) darüber, welche Produkte für welche Abgabestelle (im Verkaufsraum) bzw. für welchen Auftrag in welcher Stückzahl einzusammeln sind und in welchem Lagermodul diese untergebracht sind.

Das Auffinden des Moduls sowie des richtigen Führungskanals wird durch ein Gitternetz, gebildet durch Index-Elemente 31, erleichtert, die durch den Computer der Anlage derart angesteuert werden, daß für jede gesuchte Packung ein rechteckiges Feld 30 des Lagermoduls in der jeweiligen Abgabestelle (im Verkaufsraum) bzw. einer Produktgruppe (kompletter Auftrag) markiert wird. Dabei wird jedem Bediener eine Farbe zugeordnet, anhand der er erkennen kann, welche Leuchtanzeige ihm gilt. Dazu ist jedes Index-Element mit mehreren Leuchtdioden bestückt, die entweder verschiedenfarbig sind oder jedenfalls verschiedenfarbig leuchten. So können entsprechend der vorhandenen Farbanzahl mehrere Bediener gleichzeitig und unabhängig voneinander bei der Handkommissionierung unterstützt werden. Ebenso ist es möglich, jedem Bediener mehrere Lagerorte (verschiedener Produkte) zeitgleich anzuzeigen.

Der Index des Lagerortes wird also nicht nur alphanumerisch angezeigt, sondern gleiohzeitig direkt markiert. Vorteil: schnelleres Auffinden, selbst bei ausgefallener Gebäudebeleuchtung im Falle eines Stromausfalls. In manchen europäischen Regionen bringt jedes Gewitter einen bis zu mehrere Stunden dauernden Netzausfall mit sich.

In einem anderen Ausführungsbeispiel erfolgt das Auffinden des Produktschachts durch ein Lämpchen, das am entsprechenden Modul aufleuchtet, sowie durch die alphanumerische Anzeige von Ebene und Schacht. Dies gilt sowohl für die manuelle Beschickung des Regals als auch für den Fall, daß der Roboter aufgrund einer Betriebsstörung ausfällt. Die ursprünglich vorgesehene Indizierung entfällt.

Der Computer ist natürlich über eine unterbrechungsfreie Stromversorgungsanlage vor Netzausfällen geschützt. Diese versorgt ebenso die gesamte Informations- und Signalisierungsanlage.

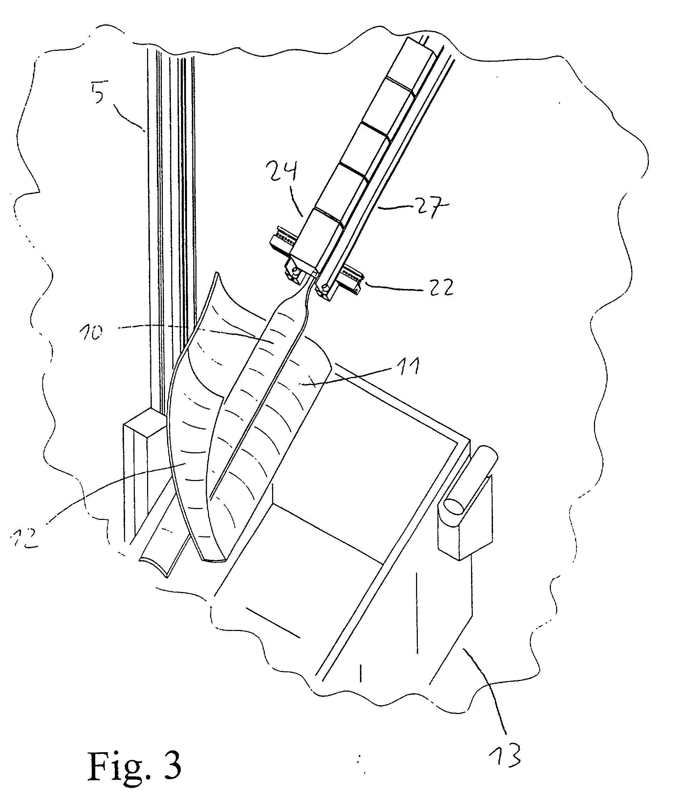

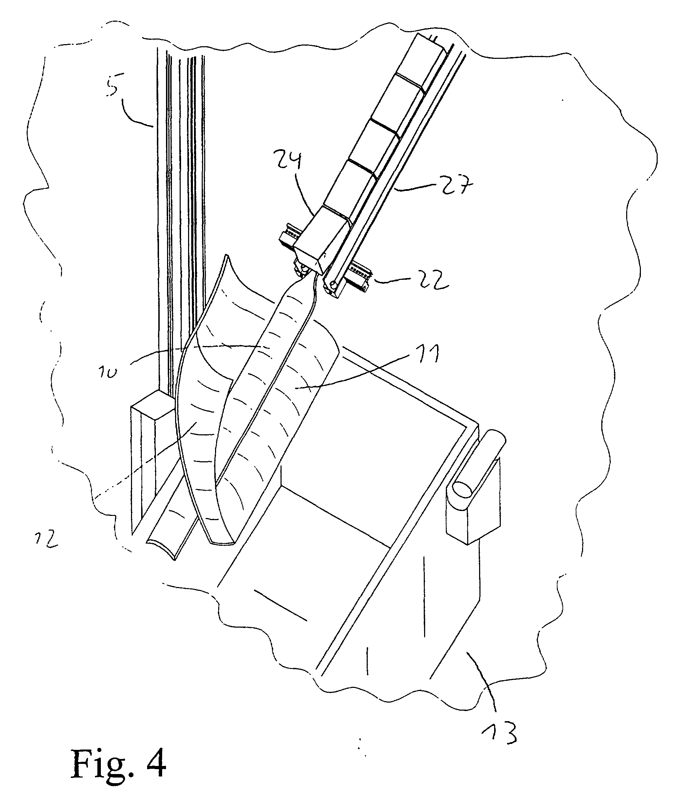

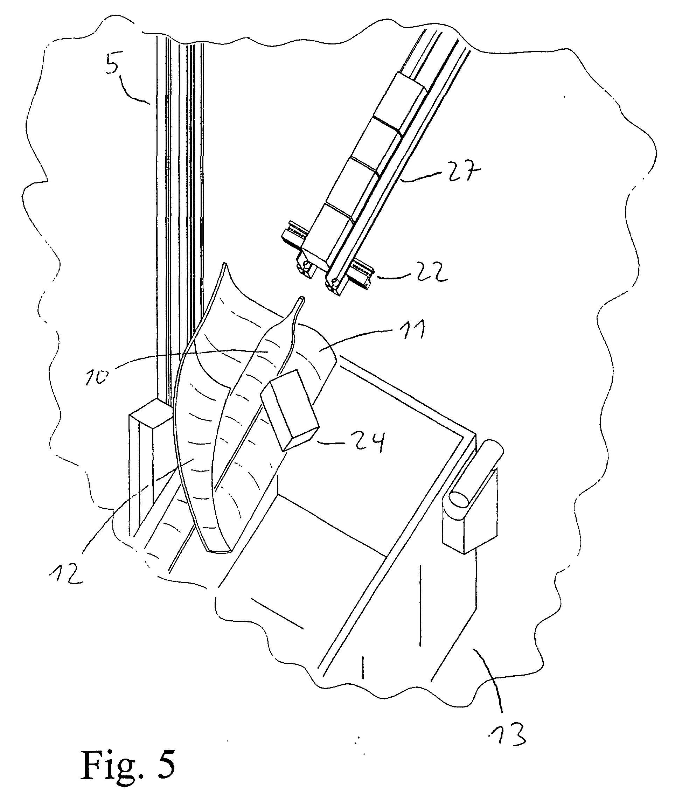

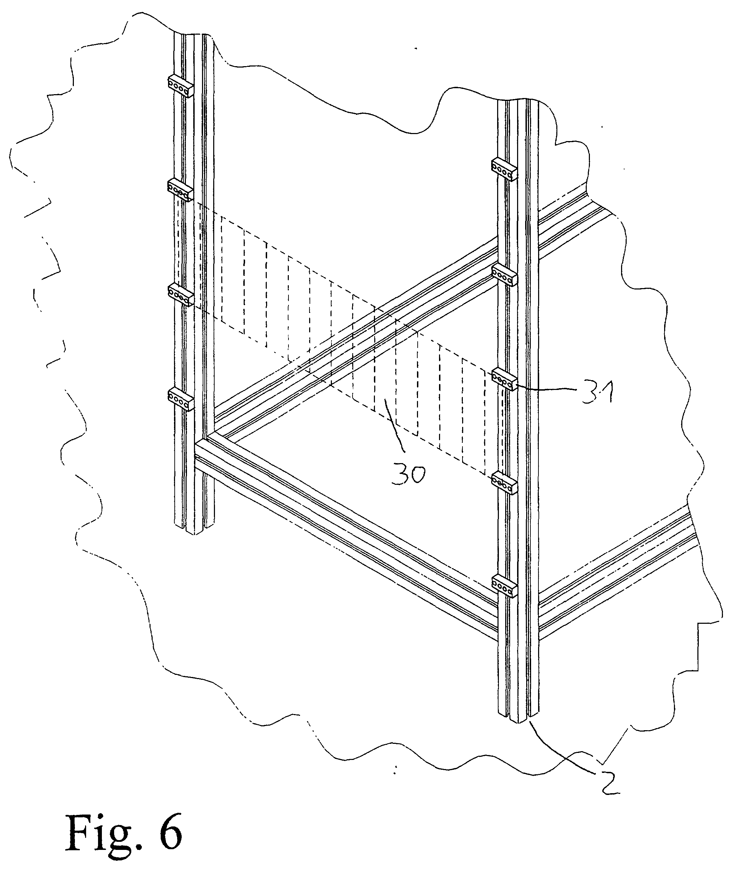

Der Entnahmevorgang stellt sich wie folgt dar:
Zur Entnahme einer Produktpackung aus einem Lagermodul wird die Ausstoßvorrichtung vor dem entsprechenden Führungskanal positioniert.
Der Ausstoßhebel 10 wird ausgefahren (Fig.3). Wenn der Stößel vollständig ausgefahren ist, wird die gesamte Ausstoß- und Auffangvorrichtung um ca. 10 bis 15mm angehoben (durch Verfahren der Vertikalachse). Die vorderste Packung wird über die sie fixierende Schraube 25 gehoben (Fig. 4) und beginnt über den Stoßhebel 10 zu gleiten (Fig.5). Nach einer Wartezeit von einigen hundertstel Sekunden, die durch Versuchsreihen zu optimieren ist, wird der Ausstoßhebel wieder eingefahren und zeitgleich die gesamte Ausstoß- und Auffangvorrichtung wieder abgesenkt, vorzugsweise um das zuvor angehobene Maß (dieses Absenken ist jedoch nicht zwingend erforderlich, da es auf den eigentlichen Entnahmevorgang keinen Einfluß hat). In der Zwischenzeit ist die entnommene Packung in die Auffangvorrichtung 13 gefallen. Die Ausstoß- und Auffangvorrichtung kann nun zur nächsten Lagerposition oder zu einer der Abgabestellen 16 gefahren werden.

Der Abgabevorgang stellt sich wie folgt dar:
Zur Abgabe der entnommenen Produktpackung(en), d.h. zur Entleerung des Auffangbehälters, wird der dazu vorgesehene Öffnungshaken 15 der Klappe 14 über der Öse 17 der zur Übernahme der Packung(en) vorgesehenen Abgabestelle 16 positioniert. Durch Absenken der gesamten Vorrichtung wird der Haken in die etwas größere Öse eingelassen. Durch eine Horizontalbewegung der gesamten Vorrichtung wird dann die Klappe geöffnet und, nachdem die im Auffangbehälter transportierten Produkte vollständig herausgerutscht sind, wieder verschlossen, wobei die Magnetschnapper bzw. die alternative elektromagnetische Verriegelung 18 ein späteres, unbeabsichtigtes Öffnen der Klappe verhindern.

Zur Vermeidung von Schäden durch unbeabsichtigtes Kollidieren des Öffnungshakens mit den Ösen der ggfls. zahlreichen Abgabestellen kann der Haken wegklappbar ausgestaltet sein, ähnlich dem von Pkw-Außenspiegeln bekannten Schutzmechanismus, jedoch ist bei der Ausführung der hier beschriebenen Anlage der Klappmechanismus selbstrückstellend zu gestalten (im Gegensatz zum Pkw-Spiegel).

## Patentansprüche

1. Regal für kleinteilige Lagergüter, insbesondere für Apotheken, wobei mehrere geneigte Schächte (29) übereinander und nebeneinander angeordnet sind, mit einer gemeinsamen Entladevorrichtung (9) für eine Vielzahl von Schächten, die vor den Schächten horizontal und vertikal verfahrbar ist, **dadurch gekennzeichnet, daß** die Entladevorrichtung als Ausstoß- und Auffangvorrichtung (9) durch einen ein- und ausfahrbaren Ausstoßhebel (10) und einen Sammelbehälter (13) gebildet wird, wobei die Ausstoß- und Auffangvorrichtung (9) so ausgebildet ist, daß zur Entnahme eines Lagerguts (24) die Ausstoß- und Auffangvorrichtung (9) vor dem entsprechenden Schacht (29) positioniert wird, der Ausstoßhebel (10) ausgefahren und dann die gesamte Ausstoß- und Auffangvorrichtung (9) vertikal angehoben wird, wodurch der Ausstoßhebel (10) das vorderste Lagergut aus dem Schacht heraushebt und das angehobene Lagergut in den Sammelbehälter (13) rutscht.

2. Regal nach Anspruch 1, **gekennzeichnet durch** eine geneigte Stößelanordnung und/oder eine Rutsche (12) an dem Stößel (10).

3. Regal nach Anspruch 1 oder 2, **dadurch gekennzeichnet, daß** eine Stößelführung neben dem Stößelantrieb oder ein Stößelantrieb vorgesehen ist, der zugleich eine Führung bildet.

4. Regal nach einem der Ansprüche 1 bis 3, **gekennzeichnet durch** eine hängende Anordnung der Entladevorrichtung.

5. Regal nach einem der Ansprüche 1 bis 4, **gekennzeichnet durch** eine horizontale Fahrschiene (3) mit Zahnriemenantrieb und/oder. eine vertikale Fahrschiene (5) mit Zahnriemenantrieb.

6. Regal nach Anspruch 4 oder 5, **gekennzeichnet durch** einen auf der horizontalen Fahrschiene (3) verfahrbaren Fahrwagen (4), der die vertikale Fahrschiene (5) trägt.

7. Regal nach Anspruch 5 oder 6, **gekennzeichnet durch** eine untere Führungsschiene.

8. Regal nach einem der Ansprüche 1 bis 7, **dadurch gekennzeichnet, daß** der Stößel mit einer Sensorik gekoppelt ist.

9. Regal nach Anspruch 8, **gekennzeichnet durch** eine Druck- und/oder Berührungssensorik und/oder eine optische Sensorik und/oder eine induktive Sensorik und/oder eine kapazitive Sensorik.

10. Regal nach einem der Ansprüche 1 bis 9, **gekennzeichnet durch** eine EDV-Steuerung mit Zeitmeßeinrichtung und/oder Schachtzähleinrichtung und/oder Ebenenzähleinrichtung und/oder Strichcode-Lese-Einrichtung und einen Strichcode an den Schächten und/oder an dem Lagergut.

11. Regal nach einem der Ansprüche 1 bis 10, **gekennzeichnet durch** eine EDV-Steuerung mit Selbstlernfunktion und/oder Fehlerkompensation.

12. Regal nach einem der Ansprüche 1 bis 11, **gekennzeichnet durch** eine alphanumerische Anzeige.

13. Regal nach einem der Ansprüche 1 bis 12, **gekennzeichnet durch** Schächte, welche **durch** Auflageflächen und dazu senkrecht stehende Stege gebildet werden, wobei der Abstand der Stege (27) verstellbar ist.

14. Regal nach Anspruch 13, **dadurch gekennzeichnet, daß** die Stege (27) durch T-förmige oder L-förmige Schienen gehalten sind.

15. Regal nach Anspruch 13 oder 14, **gekennzeichnet durch** ein Rastermaß für die Verstellung der Stege (27), das kleiner als 10 mm ist.

16. Regal nach einem der Ansprüche 13 bis 15, **gekennzeichnet durch** eine Verschraubung der Schienen (27) von oben in die Traversen oder eine stirnseitige Verschraubung, wobei die Schienen (27) mit einem Materialstück (26) unterlegt sind, in dem sich mindestens ein Durchgangsloch für die Verschraubung befindet.

17. Regal nach einem der Ansprüche 1 bis 16, **gekennzeichnet durch** Vierkantprofile (5), die an den Seitenflächen mit Längsnuten und mit eingesetzten Gewindestreifen (23) versehen sind und aus Aluminium bestehen.

18. Regal nach einem der Ansprüche 1 bis 17, **gekennzeichnet durch** eine Befüllvorrichtung mit einem Behälter mit geneigtem Boden und einer austrittsseitigen Klappe oder Haltehebel.

19. Regal nach Anspruch 18, **dadurch gekennzeichnet, daß** die Klappe den Spalt in den bestimmungsgemäßen Schacht überbrückt.

20. Regal nach einem der Ansprüche 13 bis 19, **gekennzeichnet durch** eine seitliche Führung der Produkte/Artikel beim Übergang in die Schächte und/oder von den Schächten.

## Claims

1. Storage shelves for small goods, especially for drug stores, wherein a couple of inclined channels (29) are arranged one on top of the other and side by side, with a common ejection device (9) for a large number of channels which can be moved in front of the channels, caracterized by the execution of the ejector device as ejection and catch device (9) formed by an extendable and returnable ejection lever (10) and a collection receptacle (13), wherein the ejection and catch device (9) is formed in such a way that for an ejection of a good (24) the ejection and catch device (9) is positionned in front of the corresponding channel (29), the ejection lever (10) is extended and than the whole ejection and catch device (9) is lifted up, which makes the ejection lever (10) lifting the frontmost good out of the channel and sliding it into the collection receptacle (13).

2. Storage shelves as recited in claim 1, wherein the ejector is inclined and/or a chute (12) is fixed at the ejector (10).

3. Storage shelves as recited in one of the claims 1 or 2, wherein a guideway is fixed aside the ejector drive or an ejector drive forming itself a guideway.

4. Storage shelves as recited in one of the claims 1 to 3, wherein the ejection device is hanging.

5. Storage shelves as recited in one of the claims 1 to 4, with a horizontal rail (3) with belt-drive and/or with a vertical rail with belt-drive.

6. Storage shelves as recited in one of the claims 4 or 5, with a carriage (4) movable on the horizontal rail (3) and carrying the vertical rail (5).

7. Storage shelves as recited in one of the claims 5 or 6, with a lower guideway rail.

8. Storage shelves as recited in one of the claims 1 to 7, wherein the ejector is coupled to a sensory device.

9. Storage shelves as recited in claim 8, wherein the sensory device is formed by a pressure/force and or contact sensor and /or an optical sensor and/or an inductive sensor and/or a capacitive sensor.

10. Storage shelves as recited in one of the claims 1 to 9, with a computer controlled unit with time control and/or channel counter device and/or level counter device and/or barcode lecture unit and barcodes at the channels and/or at the stored goods.

11. Storage shelves as recited in one of the claims 1 to 10, wherein the computer controlled unit has a self-teaching function and/or an error compensation device.

12. Storage shelves as recited in one of the claims 1 to 11, with an alphanumerical display.

13. Storage shelves as recited in one of the claims 1 to 12, wherein the channels are formed by supporting surfaces and perpendicular seperations wherein the distance between the separations (27) is adjustable.

14. Storage shelves as recited in claim 13, wherein the separations (27) are held by T-shaped or L-shaped rails.

15. Storage shelves as recited in one of the claims 13 or 14, wherein the grid for the adjustment of the separations (27) is smaller than 10 mm.

16. Storage shelves as recited in one of the claims 13 to 15, wherein the rails (27) are screwed to the horizontal support from the top or from the forehead, in which the rails (27) are underlaid by a piece (26) having at least one whole for stewing together.

17. Storage shelves as recited in one of the claims 1 to 16, with square aluminium profiles (5) having at their lateral faces longitudinal grooves with inserted thread strips (23).

18. Storage shelves as recited in one of the claims 1 to 17, wherein the collecting device has a receptacle with an inclined bottom and a flap or a holding lever.

19. Storage shelves as recited in claim 18, wherein the flap bridges the crevice at the destinated channel.

20. Storage shelves as recited in one of the claims 13 to 19, wherein the goods/articles are guided laterally crossing to the channels and/or from the channels.

## Revendications

1. Rayonnage pour marchandises minuscules, particulièrement destiné aux pharmacies, où plusieurs canaux inclinés (29) sont rangés de façon superposée et côte à côte, avec un dispositif d'éjection (9) étant commun pour un grand nombre de canaux, lequel peut être déplacé horizontalement et verticalement devant les canaux,
**caractérise du fait que** le dispositif d'éjection, comme dispositif d'éjection et de recueil (9), est formé par un poussoir éjecteur (10) pouvant être avancer et reculer et un réceptacle collecteur (13), où le dispositif d'éjection et de recueil (9) est formé de manière que pour la prise d'une marchandise (24) le dispositif d'éjection et de recueil (9) est positionné devant le canal correspondant, le poussoir d'éjection est avancé et puis l'entier dispositif d'éjection et de recueil (9) est lever verticalement, par où la marchandise la plus en avant est éjectée par le poussoir d'éjection et glisse dans le réceptacle collecteur (13).

2. Rayonnage selon la revendication 1, **caractérisé par** une disposition de poussoir éjecteur inclinée et/ou une glissière (12) faisant partie du poussoir éjecteur (10).

3. Rayonnage selon la revendication 1 ou 2, **caractérisé du fait qu'**il est prévu un guidage du poussoir à côté de l'entraînement du poussoir ou un entraînement du poussoir formant un guidage lui-même.

4. Rayonnage selon une des revendications 1 à 3, **caractérisé par** une disposition suspendue du dispositif de prise de marchandises.

5. Rayonnage selon une des revendications 1 à 4, **caractérisé par** un rail de roulement horizontal (3) avec une courroie crantée et/ou rail de roulement vertical (5) avec une courroie crantée.

6. Rayonnage selon la revendication 4 ou 5, **caractérisé par** un guidage coulissant (4) sur le rail horizontal (3) et portant le rail vertical (5).

7. Rayonnage selon la revendication 5 ou 6, **caractérisé par** un rail de guidage bas.

8. Rayonnage selon une des revendications 1 à 7, **caractérisé par** le couplage du poussoir éjecteur avec un bloc détecteur.

9. Rayonnage selon la revendication 8, **caractérisé par** un bloc détecteur de pression/force et/ou un bloc détecteur de contact et/ou un bloc détecteur optique et/ou un bloc détecteur d'induction et/ou un bloc détecteur de capacité.

10. Rayonnage selon une des revendications 1 à 9, **caractérisé par** une commande de traitement de l'information avec chronomètre et/ou compteur de canaux et/ou compteur de niveau et/ou lecteur de code-à-barres et des codes-à-barres aux canaux et/ou aux marchandises.

11. Rayonnage selon une des revendications 1 à 10, **caractérisé par** une commande de traitement de l'information avec fonction de contrôle autodictactique et/ou compensation d'erreurs.

12. Rayonnage selon une des revendications 1 à 11, **caractérisé par** un affichage alphanumérique.

13. Rayonnage selon une des revendications 1 à 12, **caractérisé par** des canaux formés par des surfaces de repos et des séparations y étant perpendiculaires, où les distances entre les séparations (27) sont ajustables.

14. Rayonnage selon la revendication 13, **caractérisé du fait que** les séparations (27) sont tenues par des rails en T ou en L.

15. Rayonnage selon la revendication 13 ou 14, **caractérisé par** une dimension de trame de l'ajustage des séparations (27) inférieure à 10 mm.

16. Rayonnage selon une des revendications 13 à 15, **caractérisé par** un vissage des rails (27) aux traverses par le haut ou un vissage sur la face, où des cales (26) - avec au moins un trou de passage pour le boulonnage - sont placées en dessous des rails (27).

17. Rayonnage selon une des revendications 1 à 16, **caractérisé par** des profils 4 pans (5) en aluminium ayant des rainures à leurs faces latérales munis de bandes filetées (23).

18. Rayonnage selon une des revendications 1 à 17, **caractérisé par** un réceptacle collecteur avec un fond incliné et une trappe ou un levier de retenu.

19. Rayonnage selon la revendication 18, **caractérisé du fait que** la trappe superpose la fente au canal destiné.

20. Rayonnage selon une des revendications 13 à 19, **caractérisé par** un guidage latéral des marchandises/articles au passage vers les canaux et/ou depuis les canaux.
